# DEMANDE DE BREVET EUROPEEN

(11) **EP 0 687 623 A1**
(43) Date de publication de la demande: **20.12.1995**
(21) Numéro de dépôt: 95109279.0
(22) Date de dépôt: 15.06.1995
(51) Int. Cl.: B62M 29/00, B62K 13/00

(54) **Véhicule à roues et à chenilettes, apte à fonctionner sur sol dur et sur sol enneigé**

(30) Priorité: 15.06.1994 CH 1884/94
(71) Demandeur: Viaccoz, Jean-Luc, CH-3961 Zinal (CH)
(72) Inventeur: Viaccoz, Jean-Luc, CH-3961 Zinal (CH)
(74) Mandataire: Robert, Jean S.

(57) **Abrégé**

La roue arrière (4) du vélo porte une roue à chaîne supplémentaire (28) reliée par une chaîne (27) à un arbre (l9) portant deux galets (2l) d'entraînement de deux chenillettes (22) formées de courroies crantées sur leurs deux faces. L'arbre (l9) constitue l'une de deux traverses d'un bâti formé de deux éléments triangulaires (l5-l6-l7) articulés sur l'axe (l8) de la roue arrière (4) du vélo. Ce bâti constitue un berceau qui peut être basculé autour de l'axe (l8) pour occuper une position de repos dans laquelle il est soulevé et maintenu accroché à la fourche arrière (lb) du cadre du véhicule et une position de travail dans laquelle les chenillettes (22) sont interposées entre la roue (4), alors légèrement soulevée, et le sol enneigé.

## Description

La présente invention a pour objet un véhicule à roues et à chenillettes, apte à fonctionner sur sol dur et sur sol enneigé.

De tels véhicules, en particulier des vélos, sont connus en soi.

Le but de la présente invention est de fournir une construction d'un tel véhicule qui rende commode son utilisation, et dont l'efficacité, spécialement lorsqu'il fonctionne sur sol enneigé, en soit améliorée.

Ce but est atteint grâce aux moyens définis dans la revendication l.

Le dessin représente, à titre d'exemple, une forme d'exécution de l'objet de l'invention.
La fig. l est une vue en élévation d'un vélo apte à fonctionner comme ski-bob représenté en condition de marche sur sol dur, c'est-à-dire de marche en tant que vélo.
La fig. 2 est une vue d'un détail, à plus grande échelle, prise dans la direction de la flèche II de la fig. l.
La fig. 3 est une vue en élévation du vélo de la fig. l représenté en condition de marche sur sol enneigé, c'est-à-dire de marche en tant que ski-bob, et
La fig. 4 est une vue agrandie d'un détail de la fig. l.

La partie vélo du véhicule représenté, qui est classique, ne sera pas décrite ici en détail mais de façon succincte. Ce vélo comprend un cadre l muni, à l'avant, d'une fourche orientable 2 portant la roue avant, désignée par 3.

La partie postérieure du cadre l présente deux fourches la et lb entre lesquelles est montée la roue arrière, désignée par 4. Un pédalier 5 entraîne, par une chaîné 6 munie d'un changement de vitesses à dérailleur 7, la roue 4.

La partie ski-bob du véhicule comprend, à l'avant, un bâti en forme de berceau coiffant la roue 3. Les parties latérales de ce berceau, situées de part et d'autre de la roue 3, sont formées chacune de deux barres 8 et 9 se rejoignant par une de leurs extrémités, par laquelle elles sont articulées sur l'axe, désigné par l0, de la roue 3. A cet effet, cet axe est plus long que dans un vélo ordinaire de façon à déborder, sur les deux branches de la fourche 2, d'une quantité suffisante pour lui permettre de recevoir les extrémités des barres 8 et 9 de chaque partie latérale du berceau.

Les deux paires de barres 8 portent, articulée à leur extrémité opposée à celle par laquelle elles sont articulées sur l'axe l0, une embase ll située entre elles. Il en est de même de la paire de barres 9 qui portent, articulée entre elles, une embase l2. Un petit ski ou patinette l3 est fixé par des vis non représentées aux embases ll et l2.

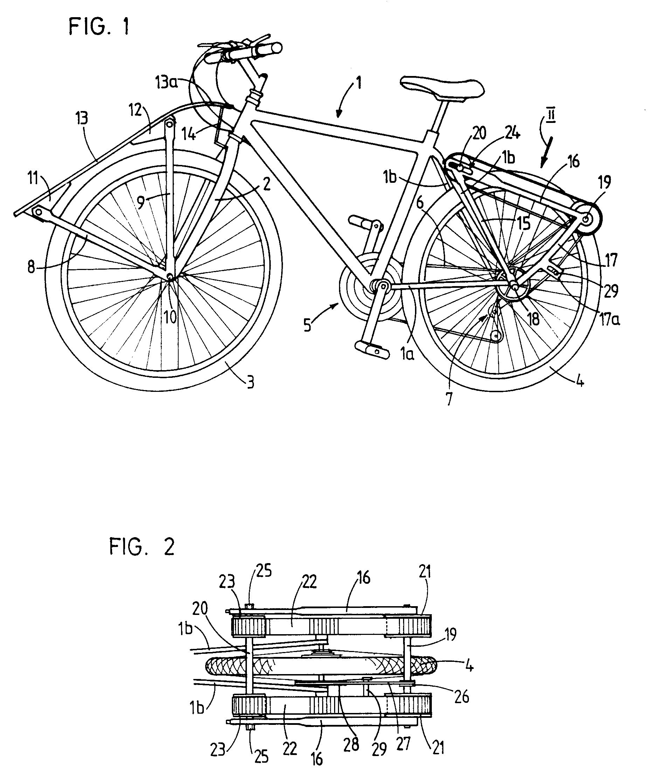

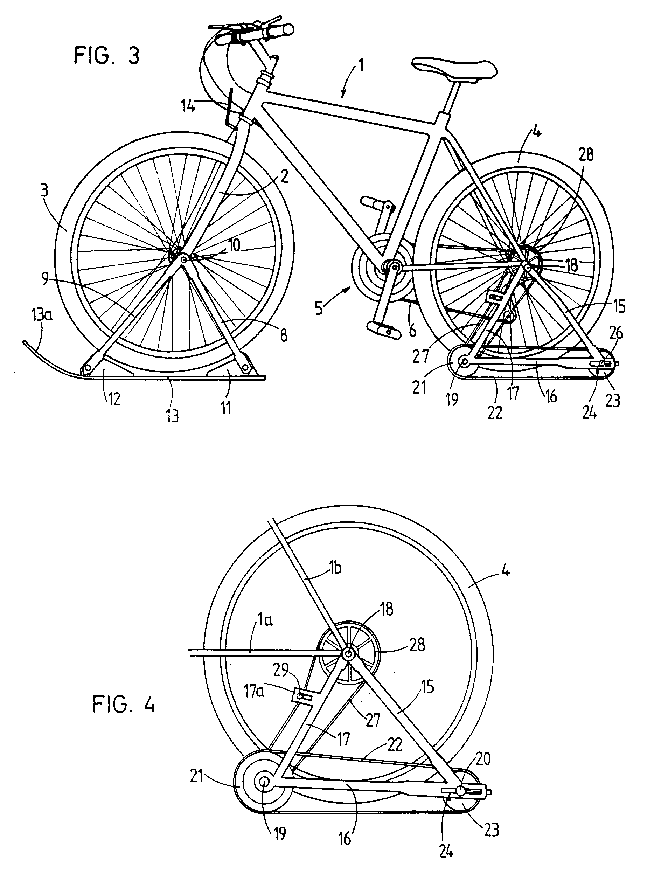

Le berceau formé par le bâti muni de la patinette l3 peut basculer autour de l'axe l0 et occuper soit une position de repos, représentée à la fig. 1, dans laquelle il est maintenu en place par la spatule, désignée par l3a, de la patinette 13 qui s'accroche, par sa propre élasticité, à une potence l4 portée par la fourche 2, soit une position de travail, représentée à la fig. 3, dans laquelle la patinette l3 est interposée entre le sol et la roue avant 3 du véhicule, légèrement soulevée. C'est dans cette position du berceau que le véhicule fonctionne comme ski-bob.

La partie ski-bob du véhicule comporte également, à l'arrière, une disposition du même genre que celle décrite précédemment, à savoir un bâti en forme de berceau. Ce dernier est constitué par deux pièces triangulaires formées chacune de trois barres l5, l6 et l7, disposées en triangle, articulées par un des sommets dudit triangle sur l'axe, désigné, par l8, de la roue arrière 4. Ces deux bâtis triangulaires sont reliés par deux traverses l9 et 20 situées aux deux autres sommets du triangle. La traverse l9 est constituée par un arbre monté rotativement entre les deux bâtis triangulaires et qui porte deux galets moteurs 2l sur chacun desquels est montée une courroie 22 crantée sur ses deux faces, formant chenillette. Les deux courroies 22 passent en outre chacune sur un deuxième galet, désigné par 23, les deux galets 23 étant montés fous sur la traverse 20. Cette dernière peut coulisser, en un mouvement de translation, dans deux fentes 24 du berceau dans lesquelles elle peut être bloquée en position par serrage d'écrous 25 (fig. 2), ce qui permet de tendre les courroies 22.

L'arbre rotatif l9 porte un pignon à chaîne 26 relié, par une chaîne 27, à une roue à chaîne 28 portée par la roue 4, à la gauche de celle-ci.

Enfin, la barre l7 de la partie gauche du bâti porte une oreille l7a sur laquelle est fixé, réglable en position, un doigt 29 permettant de modifier la tension de la chaîne 27.

Le berceau postérieur du véhicule peut occuper, par basculement, deux positions, comme le berceau antérieur, l'une de repos, représentée à la fig. l, dans laquelle la traverse 20 s'accroche à un dispositif à sautoir, non représenté, porté par la fourche lb, et l'autre, de travail, dans laquelle le véhicule fonctionne comme ski-bob, les chenillettes, constituées par les courroies crantées 22, étant interposées entre le sol, enneigé, et la roue 4, légèrement soulevée.

Le véhicule objet de l'invention est particulièrement commode en ce sens qu'il permet de passer très rapidement, sans avoir à subir aucune modification, de sa position vélo à sa position ski-bob.

Les deux berceaux, antérieur et postérieur, n'ont simplement qu'à être amenés d'une de leurs positions de fonctionnement dans l'autre, par basculement, à l'instar des pieds de stationnement que présentaient les anciennes motocyclettes avant d'être munies de béquilles comme elles le sont actuellement.

La traction sur neige, de préférence tassée, à l'aide des chenillettes 22 est extrêmement efficace. De plus, l'entraînement de ces chenillettes étant assuré par l'intermédiaire de la roue arrière 4 du vélo, le frein arrière de celui-ci agit sur lesdites chenillettes, de même que le changement de vitesses à dérailleur 7. Ainsi, ces deux dispositifs sont opérationnels aussi bien lorsque le véhicule fonctionne en tant que vélo que lorsqu'il fonctionne en tant que ski-bob.

Il est à remarquer que l'invention n'est pas limitée à son application aux vélos. On pourrait, entre autres, envisager de l'appliquer à des fauteuils roulants pour infirmes.

## Revendications

1. Véhicule à roues et à chenillettes, apte à fonctionner sur sol dur et sur sol enneigé, caractérisé par le fait qu'il comprend, articulé sur son bâti, autour d'un axe transversal par rapport à sa direction de marche, un bâti en forme de berceau, coiffant une roue, laquelle est motrice, et qui porte au moins une chenillette montée sur une paire de galets dont l'un au moins est solidaire en rotation de ladite roue, ce berceau étant susceptible d'occuper, par basculement autour de son axe d'articulation, deux positions, l'une, rabattue, dans laquelle la chenillette repose sur le sol, étant interposée entre celui-ci et ladite roue, et l'autre, relevée, dans laquelle la chenillette est hors de contact d'avec le sol.

2. Véhicule suivant la revendication l, caractérisé par le fait que ledit berceau comprend deux pièces triangulaires situées de part et d'autre de ladite roue, articulées par un de leurs sommets sur le bâti du véhicule, leurs deux autres sommets étant reliés l'un à l'autre par des traverses.

3. Véhicule suivant la revendication 2, caractérisé par le fait que chacune des pièces triangulaires du berceau est formée de trois barres constituant les côtés desdites pièces triangulaires.

4. Véhicule suivant la revendication l, caractérisé par le fait que le berceau porte deux chenillettes situées de part et d'autre du plan de ladite roue, montées sur deux paires de galets portés par ledit berceau.

5. Véhicule suivant la revendication 4, caractérisé par le fait que deux desdits galets, appartenant chacun à une desdites paires, sont solidaires l'un de l'autre, étant portés par un arbre transversal commun, monté rotativement sur le berceau, solidaire en rotation de ladite roue.

6. Véhicule suivant la revendication 5, caractérisé par le fait que ledit arbre porte un pignon relié, par une chaîne, à une roue à chaîne montée sur ladite roue.

7. Véhicule suivant les revendications 2 et 5, caractérisé par le fait que ledit arbre solidaire desdits deux galets constitue l'une des traverses du berceau.

8. Véhicule suivant la revendication 7, caractérisé par le fait que la seconde traverse du berceau porte, montés fous sur elle, deux galets formant les deuxièmes galets de chacune desdites paires, cette seconde traverse étant montée sur les pièces triangulaires du berceau de façon à pouvoir effectuer un mouvement de translation tout en étant blocable en position, ce qui permet de régler la tension des chenillettes.

9. Véhicule suivant la revendication l, constitué par un vélo, caractérisé par le fait qu'il présente, articulé coaxialement à l'axe de rotation de sa roue avant, un berceau formé de deux parties situées de part et d'autre de ladite roue avant, et qui porte une patinette, ce berceau étant apte à occuper, par basculement autour de son axe d'articulation, deux positions, l'une, rabattue, dans laquelle la patinette repose sur le sol, étant interposée entre le sol et la roue avant, et l'autre, relevée, dans laquelle la patinette est hors de contact d'avec le sol.
